# EUROPEAN PATENT APPLICATION

(11) **EP 4 611 453 A1**
(43) Date of publication of application: **03.09.2025**
(21) Application number: 23881969.2
(22) Date of filing: 27.10.2023
(51) Int. Cl.: H04W 72/04

(54) **METHOD AND DEVICE FOR NODE USED FOR WIRELESS COMMUNICATION**

(30) Priority: 28.10.2022 CN 202211333654
(71) Applicant: Apogee Networks, LLC, Dallas, TX 75201 (US)
(72) Inventor: WU, Keying, Shanghai 201206 (CN); WANG, Ping, Shanghai 201206 (CN); ZHANG, Xiaobo, Shanghai 201206 (CN)
(74) Representative: Gunzelmann, Rainer
(86) International application number: PCT/CN2023/127197
(87) International publication number: WO 2024/088394

(57) **Abstract**

The present application discloses a method and device for a node used for wireless communication. A first node receives a first information block, the first information block being used for determining a first time domain resource, and the first time domain resource comprising at least one symbol; and a first processor receives a first signal or sends a first signal, wherein a first reference signal is used for determining a spatial relationship of the first signal, and the first reference signal is used for determining a first PCI; the first reference signal comprises a synchronization signal; and whether the first time domain resource and the first reference signal overlap in the time domain is related to the first PCI. The method improves the flexibility of base station configuration and facilities the improvement of system performance, and according to requirements, the first node can flexibly select to first receive a synchronization signal of an additional cell or send an uplink physical layer signal.

## Description

### Technical Field

This application relates to a transmission method and apparatus in a wireless communication system, and in particular, to a transmission method and apparatus for a radio signal in a wireless communication system supporting a cellular network.

### Related Art

In an existing new radio (NR) system, spectrum resources are statically divided into a frequency division duplex (FDD) spectrum and a time division duplex (TDD) spectrum. For the TDD spectrum, both a base station and a user equipment (UE) operate in a half-duplex mode. This half-duplex mode avoids self-interference and can relieve impact of cross link interference (CLI), but also causes a decrease in resource utilization and an increase in a delay. For these problems, supporting a flexible duplex mode or a variable link direction (uplink, downlink, or flexibility) on the TDD spectrum or the FDD spectrum becomes a possible solution. In the 3rd generation partner project (3GPP) radio access network (RAN) #88e meeting and 3GPP R-18 workshop, a more flexible duplex mode or full duplex mode supported in NR R-18 has received extensive attention and discussion, especially a subband non-overlapping full duplex (SBFD) mode at a gNB (NR NodeB) end. Communication in this mode is severely interfered, including self-interference and the CLI. To resolve the interference problem, advanced interference cancellation technologies need to be used, including antenna isolation, beamforming, radio frequency (RF) level interference cancellation, and digital interference cancellation.

### SUMMARY

The applicant finds through research that in an SBFD scenario, spectrum allocation for uplink transmission and downlink transmission is to become more flexible, and an interference situation may also be more complex. Whether a UE receives a synchronization signal in a time domain resource configured as SBFD is a problem that needs to be resolved. In this scenario, an existing transmission solution needs to be reconsidered.

For the foregoing problem, this application discloses a solution. It should be noted that although an original intention of this application is to focus on the SBFD scenario, this application can also apply to another non-SBFD scenario. Further, using a unified design solution for different scenarios (including but not limited to the SBFD scenario and another non-SBFD scenario) further helps reduce hardware complexity and costs. An embodiment and features in the embodiment in any node of this application may be applied to another node in a case that no conflict occurs. Embodiments of this application and features in the embodiments may be freely combined in a case that no conflict occurs.

In an embodiment, for explanations of terminologies in this application, refer to definitions of a standard protocol TS 36 series of 3GPP.

In an embodiment, for explanations of terminologies in this application, refer to definitions of a standard protocol TS 38 series of 3GPP.

In an embodiment, for explanations of terminologies in this application, refer to definitions of a standard protocol TS 37 series of 3GPP.

In an embodiment, for explanations of terminologies in this application, refer to definitions of standard protocols of institute of electrical and electronics engineers (IEEE).

This application discloses a method for a first node used for wireless communication, including:
receiving a first information block, where the first information block is configured to determine a first time domain resource, and the first time domain resource includes at least one symbol; and
receiving a first signal or sending a first signal, where
a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

In an embodiment, a problem to be resolved in this application includes: when the synchronization signal and the time domain resource configured as the SBFD overlap in time domain, whether the first node receives the synchronization signal in the time domain resource configured as the SBFD. According to the method, it is determined, depending on whether the synchronization signal is a synchronization signal of an additional cell, whether the first node receives the synchronization signal in the time domain resource configured as the SBFD. Therefore, the problem is resolved.

In an embodiment, benefits of the method include improving flexibility of a base station configuration and facilitating improvement of system performance.

In an embodiment, benefits of the method include improving flexibility of UE reception.

In an embodiment, benefits of the method include: The first node may flexibly select, according to a requirement, to preferentially receive the synchronization signal of the additional cell or send an uplink physical layer signal.

According to an aspect of this application, the method is characterized in that the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

According to an aspect of this application, the method is characterized in that when the first PCI is not equal to the second PCI, whether the first time domain resource and the first reference signal overlap in time domain is implementation-related.

According to an aspect of this application, the method is characterized in that whether the first time domain resource and the first reference signal overlap in time domain is related to a type of the first PCI.

According to an aspect of this application, the method is characterized by: receiving a second information block, where the second information block indicates configuration information of the first reference signal.

According to an aspect of this application, the method is characterized by: receiving the first reference signal in a first symbol set or sending a second signal in the first symbol set, where the first time domain resource and the first reference signal overlap in time domain; a time domain resource occupied by the first reference signal includes the first symbol set; and a time domain resource allocated to the second signal includes the first symbol set.

According to an aspect of this application, the method is characterized in that the first node includes a user equipment.

According to an aspect of this application, the method is characterized in that the first node includes a relay node.

This application discloses a method for a second node used for wireless communication, including:
sending a first information block, where the first information block is configured to determine a first time domain resource, and the first time domain resource includes at least one symbol; and
sending a first signal or receiving a first signal, where
a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

According to an aspect of this application, the method is characterized in that the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

According to an aspect of this application, the method is characterized in that when the first PCI is not equal to the second PCI, whether the first time domain resource and the first reference signal overlap in time domain is implementation-related.

According to an aspect of this application, the method is characterized in that whether the first time domain resource and the first reference signal overlap in time domain is related to a type of the first PCI.

According to an aspect of this application, the method is characterized by: sending a second information block, where the second information block indicates configuration information of the first reference signal.

According to an aspect of this application, the method is characterized by: sending the first reference signal in a first symbol set or receiving a second signal in a first symbol set, where the first time domain resource and the first reference signal overlap in time domain; a time domain resource occupied by the first reference signal includes the first symbol set; and a time domain resource allocated to the second signal includes the first symbol set.

According to an aspect of this application, the method is characterized in that the second node is a base station.

According to an aspect of this application, the method is characterized in that the second node is a user equipment.

According to an aspect of this application, the method is characterized in that the second node is a relay node.

This application discloses a first node used for wireless communication, including:
a first processor, receiving a first information block, where the first information block is configured to determine a first time domain resource, and the first time domain resource includes at least one symbol, where
the first processor receives a first signal or sends a first signal, where
a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

This application discloses a second node used for wireless communication, including:
a second processor, sending a first information block, where the first information block is configured to determine a first time domain resource, and the first time domain resource includes at least one symbol, where
the second processor sends a first signal or receives a first signal, where
a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

In an embodiment, compared with the conventional solution, this application has the following advantages.

Flexibility of a base station configuration is improved, and improvement of system performance is facilitated.

The first node may flexibly select, according to a requirement, to preferentially receive the synchronization signal of the additional cell or send an uplink physical layer signal.

### BRIEF DESCRIPTION OF THE DRAWINGS

Other features, objectives, and advantages of this application become more apparent by reading detailed descriptions of non-restrictive embodiments with reference to the following accompanying drawings.
FIG. 1 is a flowchart of a first information block and a first signal according to an embodiment of this application;
FIG. 2 is a schematic diagram of network architecture according to an embodiment of this application;
FIG. 3 is a schematic diagram of an embodiment of radio protocol architectures of a user plane and a control plane according to an embodiment of this application;
FIG. 4 is a schematic diagram of a first communication device and a second communication device according to an embodiment of this application;
FIG. 5 is a flowchart of transmission between a first node and a second node according to an embodiment of this application;
FIG. 6 is a flowchart of transmission between a first node and a second node according to another embodiment of this application;
FIG. 7 is a schematic diagram of a first information block being configured to determine a second PCI according to an embodiment of this application;
FIG. 8 is a schematic diagram showing whether a first time domain resource and a first reference signal overlap in time domain according to an embodiment of this application;
FIG. 9 is a schematic diagram showing whether a first time domain resource and a first reference signal overlap in time domain being related to a type of a first PCI according to an embodiment of this application;
FIG. 10 is a schematic diagram of a first node receiving a first reference signal or sending a second signal according to an embodiment of this application;
FIG. 11 is a block diagram of a structure of a processing apparatus used in a first node according to an embodiment of this application; and
FIG. 12 is a block diagram of a structure of a processing apparatus used in a second node according to an embodiment of this application.

### DETAILED DESCRIPTION

The following describes the technical solution of this application in further detail with reference to the accompanying drawings. It should be noted that embodiments of this application and features in the embodiments may be freely combined in a case that no conflict occurs.

### Embodiment 1

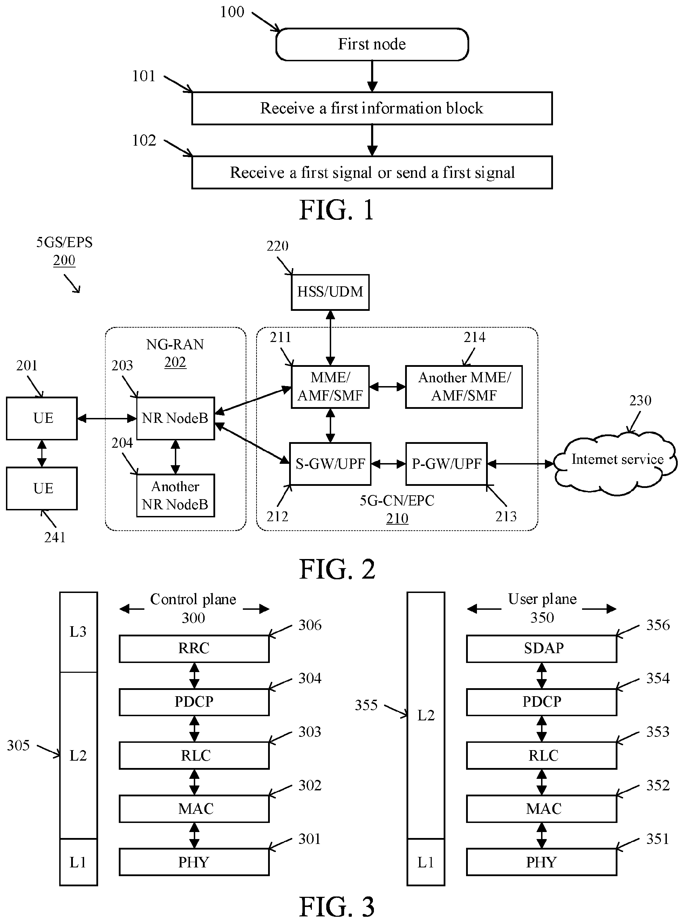

Embodiment 1 shows an example of a flowchart of a first information block and a first signal according to an embodiment of this application, as shown in FIG. 1. In FIG. 1, each box represents one step. In particular, a sequence of steps in boxes does not indicate a particular time sequence relationship between the steps.

In Embodiment 1, a first node 100 described in this application receives the first information block in step 101, and receives the first signal or sends the first signal in step 102.

In Embodiment 1, the first information block is used for determining a first time domain resource, and the first time domain resource includes at least one symbol. A first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

In an embodiment, a PCI stands for physical cell identifier.

In an embodiment, a PCI stands for physical cell identity.

In an embodiment, a PCI stands for a physical-layer cell identifier.

In an embodiment, a PCI stands for physCellId.

In an embodiment, the first information block is carried in higher layer signaling.

In an embodiment, the first information block is carried in radio resource control (RRC) signaling.

In an embodiment, the first information block includes information in all or a part of fields in an RRC information element (IE).

In an embodiment, the first information block includes information in all or a part of fields in a TDD-UL-DL-ConfigCommon IE.

In an embodiment, the first information block includes information in all or a part of fields in a TDD-UL-DL-ConfigDedicated IE.

In an embodiment, the first information block is carried in an RRC IE.

In a sub-embodiment of the foregoing embodiment, a name of an IE carrying the first information block includes "TDD-UL-DL-Config".

In a sub-embodiment of the foregoing embodiment, a name of an IE carrying the first information block includes "ServingCellConfig".

In an embodiment, the first information block is carried in a TDD-UL-DL-ConfigCommon IE.

In an embodiment, the first information block is carried in a TDD-UL-DL-ConfigDedicated IE.

In an embodiment, the first information block is carried in a ServingCellConfig IE.

In an embodiment, the first information block is carried in a ServingCellConfigCommon IE.

In an embodiment, the first information block is carried in a ServingCellConfigCommonSIB IE.

In an embodiment, the first information block is carried in a medium access control layer control element (MAC CE).

In an embodiment, the first information block is carried in physical layer signaling.

In an embodiment, the first information block is carried in downlink control information (DCI).

In an embodiment, the first information block includes information in one or more fields in a piece of DCI.

In an embodiment, the first information block is carried in DCI of DCI format 2_0.

In an embodiment, the first information block is used by the first node 100 to determine the first time domain resource.

In an embodiment, the first information block indicates that a sending end of the first signal block simultaneously receives and sends radio signals in the first time domain resource.

In an embodiment, the first information block indicates that the at least one symbol in the first time domain resource is used for both uplink transmission and downlink transmission.

In an embodiment, the first information block indicates that any symbol in the first time domain resource is used for both uplink transmission and downlink transmission.

In an embodiment, the first time domain resource includes at least one symbol.

In an embodiment, the first time domain resource includes one symbol.

In an embodiment, the first time domain resource includes a plurality of consecutive symbols.

In an embodiment, the first time domain resource includes a plurality of nonconsecutive symbols.

In an embodiment, the first time domain resource includes at least one slot.

In an embodiment, the first time domain resource includes at least one subframe.

In an embodiment, a receiving end of the first information block receives a radio signal in the first time domain resource.

In an embodiment, a receiving end of the first information block sends a radio signal in the first time domain resource.

In an embodiment, a receiving end of the first information block receives a radio signal or sends a radio signal in the first time domain resource.

In an embodiment, a sending end of the first signal block simultaneously receives and sends radio signals in the first time domain resource.

In an embodiment, a sending end of the first signal block simultaneously receives and sends radio signals in the at least one symbol in the first time domain resource.

In an embodiment, a sending end of the first signal block simultaneously receives and sends radio signals in any symbol in the first time domain resource.

In an embodiment, a sending end of the first signal block simultaneously receives and sends, in a cell group in which the first signal is located, radio signals in the first time domain resource.

In an embodiment, a sending end of the first signal block simultaneously receives and sends, in a cell group in which the first signal is located, radio signals in the at least one symbol in the first time domain resource.

In an embodiment, a sending end of the first signal block simultaneously receives and sends, in a cell group in which the first signal is located, radio signals in any symbol in the first time domain resource.

In an embodiment, a sending end of the first signal block simultaneously receives and sends, in a cell in which the first signal is located, radio signals in the first time domain resource.

In an embodiment, a sending end of the first signal block simultaneously receives and sends, in a cell in which the first signal is located, radio signals in the at least one symbol in the first time domain resource.

In an embodiment, a sending end of the first signal block simultaneously receives and sends, in a cell in which the first signal is located, radio signals in any symbol in the first time domain resource.

In an embodiment, a sending end of the first signal block simultaneously receives and sends, in a bandwidth part (BWP) of a cell in which the first signal is located, radio signals in the first time domain resource.

In an embodiment, a sending end of the first signal block simultaneously receives and sends, in a BWP of a cell in which the first signal is located, radio signals in the at least one symbol in the first time domain resource.

In an embodiment, a sending end of the first signal block simultaneously receives and sends, in a BWP of a cell in which the first signal is located, radio signals in any symbol in the first time domain resource.

In an embodiment, the first time domain resource includes a symbol that may be used for both uplink transmission and downlink transmission.

In an embodiment, the at least one symbol in the first time domain resource may be used for both uplink transmission and downlink transmission.

In an embodiment, any symbol in the first time domain resource may be used for both uplink transmission and downlink transmission.

In an embodiment, the first time domain resource includes a symbol that is used for both uplink transmission and downlink transmission.

In an embodiment, the at least one symbol in the first time domain resource is used for both uplink transmission and downlink transmission.

In an embodiment, any symbol in the first time domain resource is used for both uplink transmission and downlink transmission.

In an embodiment, the first time domain resource is used, in a cell group to which the first signal is located, for both uplink transmission and downlink transmission.

In an embodiment, the at least one symbol in the first time domain resource is used, in a cell group in which the first signal is located, for both uplink transmission and downlink transmission.

In an embodiment, any symbol in the first time domain resource is used, in a cell group in which the first signal is located, for both uplink transmission and downlink transmission.

In an embodiment, the first time domain resource is used, in a cell in which the first signal is located, for both uplink transmission and downlink transmission.

In an embodiment, the at least one symbol in the first time domain resource is used, in a cell in which the first signal is located, for both uplink transmission and downlink transmission.

In an embodiment, any symbol in the first time domain resource is used, in a cell in which the first signal is located, for both uplink transmission and downlink transmission.

In an embodiment, the first time domain resource is used, in a BWP of a cell in which the first signal is located, for both uplink transmission and downlink transmission.

In an embodiment, the at least one symbol in the first time domain resource is used, in a BWP of a cell in which the first signal is located, for both uplink transmission and downlink transmission.

In an embodiment, any symbol in the first time domain resource is used, in a BWP of a cell in which the first signal is located, for both uplink transmission and downlink transmission.

In an embodiment, the first time domain resource is configured as full duplex.

In an embodiment, the first time domain resource is configured as non-overlapping full duplex.

In an embodiment, the first time domain resource is configured as SBFD.

In an embodiment, the at least one symbol in the first time domain resource is configured to be in more than one link direction.

In an embodiment, any symbol in the first time domain resource is configured to be in more than one link direction.

In an embodiment, a range of the link direction includes at least one of uplink (UL), downlink (DL), flexible, or sidelink (SL).

In an embodiment, a range of the link direction includes at least one of UL or DL.

In an embodiment, a range of the link direction includes UL and DL.

In an embodiment, a range of the link direction includes UL, DL, and flexible.

In an embodiment, the symbol includes an orthogonal frequency division multiplexing (OFDM) symbol.

In an embodiment, the symbol includes a discrete Fourier transform spread OFDM (DFT-S-OFDM) symbol.

In an embodiment, the symbol is obtained through OFDM symbol generation on an output of transform precoding.

In an embodiment, the first signal includes a baseband signal.

In an embodiment, the first signal includes a radio signal.

In an embodiment, the first signal includes a radio frequency signal.

In an embodiment, the first signal is unicast.

In an embodiment, the first signal is UE-dedicated.

In an embodiment, the first signal includes a transport block (TB).

In an embodiment, the first signal includes a signal transmitted on a physical channel.

In an embodiment, the first signal includes a signal transmitted on a physical layer control channel.

In an embodiment, the first signal includes a signal transmitted on a physical downlink control channel (PDCCH).

In an embodiment, the first signal includes a signal transmitted on a physical uplink control channel (PUCCH).

In an embodiment, the first signal is transmitted on a PDCCH or a PUCCH, and a cyclic redundancy check (CRC) of the first signal is scrambled by a cell (C)-radio network temporary identifier (RNTI).

In an embodiment, the first signal is transmitted on a PDCCH or a PUCCH, and a C-RNTI is used for generating a scrambling code sequence of the first signal.

In an embodiment, the first signal includes a signal transmitted on a physical layer shared channel.

In an embodiment, the first signal includes a signal transmitted on a physical downlink shared channel (PDSCH).

In an embodiment, the first signal includes a signal transmitted on a physical uplink shared channel (PUSCH).

In an embodiment, the first signal is transmitted on a PDSCH or a PUSCH, and a CRC that is of scheduling DCI and that is of the first signal is scrambled by a C-RNTI.

In an embodiment, the first signal is transmitted on a PDSCH or a PUSCH, and a C-RNTI is used for generating a scrambling code sequence of the first signal.

In an embodiment, the first reference signal includes a baseband signal.

In an embodiment, the first reference signal includes a radio signal.

In an embodiment, the first reference signal includes a radio frequency signal.

In an embodiment, the first reference signal includes a downlink reference signal.

In an embodiment, the first reference signal includes a synchronization signal/physical broadcast channel (SS/PBCH) block.

In an embodiment, the first reference signal is a downlink reference signal.

In an embodiment, the first reference signal is an SS/PBCH Block.

In an embodiment, the first reference signal includes a primary synchronization signal (PSS), a secondary synchronization signal (SSS), and a PBCH.

In an embodiment, the first reference signal includes a PSS, an SSS, a PBCH, and a demodulation reference signal (DMRS) of the PBCH.

In an embodiment, the first reference signal includes a PSS, an SSS, and a master system information block (MIB).

In an embodiment, the first reference signal periodically occurs in time domain.

In an embodiment, the first reference signal occurs in time domain for a plurality of times.

In an embodiment, the first reference signal occurs only once in time domain.

In an embodiment, the first reference signal corresponds to an SS/a PBCH Block index.

In an embodiment, a channel occupied by the first reference signal includes a PBCH.

In an embodiment, a sending end of the first reference signal is a cell identified by using the first PCI.

In an embodiment, the first reference signal is sent in a cell identified by using the first PCI.

In an embodiment, the first reference signal and the first signal belong to a same BWP.

In an embodiment, the first reference signal and the first signal belong to a same carrier.

In an embodiment, the first reference signal and the first signal belong to different BWPs.

In an embodiment, the first reference signal and the first signal belong to different carriers.

In an embodiment, the first reference signal and the first signal belong to a same cell.

In an embodiment, the first reference signal and the first signal belong to different cells.

In an embodiment, an SS sequence included in the first reference signal indicates the first PCI.

In an embodiment, a PSS sequence and an SSS sequence included in the first reference signal jointly indicate the first PCI.

In an embodiment, an PSS sequence included in the first reference signal indicates the first PCI.

In an embodiment, an SSS sequence included in the first reference signal indicates the first PCI.

In an embodiment, the first node 100 can undoubtedly obtain the first PCI from an SS sequence of the first reference signal.

In an embodiment, the spatial relationship includes a transmission configuration indicator (TCI) state.

In an embodiment, the spatial relationship includes a quasi co-location (QCL) assumption.

In an embodiment, the spatial relationship includes a QCL parameter.

In an embodiment, a type of the QCL parameter includes TypeA, TypeB, TypeC, and TypeD.

In an embodiment, a QCL parameter of which a type is TypeA includes Doppler shift, Doppler spread, average delay, and delay spread.

In an embodiment, a QCL parameter of which a type is TypeB includes Doppler shift and Doppler spread.

In an embodiment, a QCL parameter of which a type is TypeC includes Doppler shift and average delay.

In an embodiment, a QCL parameter of which a type is TypeD includes a spatial receive parameter (Spatial Rx parameter).

In an embodiment, for specific definitions of TypeA, TypeB, TypeC, and TypeD, refer to the section 5.1.5 of 3GPP TS 38.214.

In an embodiment, the spatial relationship includes a spatial domain filter.

In an embodiment, the spatial relationship includes a spatial domain transmission filter.

In an embodiment, the spatial relationship includes a spatial domain receive filter.

In an embodiment, the spatial relationship includes a spatial transmit parameter (Spatial Tx parameter).

In an embodiment, the spatial relationship includes a spatial receive parameter (Spatial Rx parameter).

In an embodiment, the spatial relationship includes a large-scale property.

In an embodiment, the spatial relationship includes an antenna port.

In an embodiment, the spatial relationship includes a large-scale property.

In an embodiment, the large-scale property includes one or more of delay spread, Doppler spread, average gain, average delay, and spatial receive parameter (spatial Rx parameter).

In an embodiment, that the first reference signal is used for determining a spatial relationship of the first signal includes: The first reference signal and the first signal are quasi co-located.

In an embodiment, that the first reference signal is used for determining a spatial relationship of the first signal includes: The first reference signal and the first signal are quasi co-located and correspond to QCL-TypeD.

In an embodiment, that the first reference signal is used for determining a spatial relationship of the first signal includes: A large-scale property of a channel experienced by the first signal may be deduced from a large-scale property of a channel experienced by the first reference signal.

In an embodiment, that the first reference signal is used for determining a spatial relationship of the first signal includes: A same spatial characteristic is used by the first node 100 to receive the first reference signal and send or receive the first signal.

In an embodiment, that the first reference signal is used for determining a spatial relationship of the first signal includes: The first node 100 assumes that a same spatial characteristic is used for receiving the first reference signal and sending or receiving the first signal.

In an embodiment, that the first reference signal is used for determining a spatial relationship of the first signal includes: The first node 100 receives the first reference signal and sends or receives the first signal by using a same spatial domain filter.

In an embodiment, the first PCI is a non-negative integer.

In an embodiment, the first PCI is a non-negative integer not greater than 1007.

In an embodiment, a cell identified by using the first PCI is a serving cell of the first node.

In an embodiment, a cell identified by using the first PCI is not a serving cell of the first node.

In an embodiment, a cell identified by using a piece of PCI is a cell of which a PCI is equal to the piece of PCI.

In an embodiment, the first PCI is used for generating an SS sequence included in the first reference signal.

### Embodiment 2

Embodiment 2 shows an example of a schematic diagram of a network architecture according to an embodiment of this application, as shown in FIG. 2.

FIG. 2 shows a network architecture of a long-term evolution (LTE) system, a long-term evolution advanced (LTE-A) system, and a future 5G system. The network architecture of the LTE system, the LTE-A system, and the future 5G system is referred to as an evolved packet system (EPS). A network architecture of 5G NR or LTE may be referred to as a 5G system (5GS)/EPS 200 or another suitable terminology. The 5GS/EPS 200 may include one or more UEs 201, a UE 241 performing sidelink communication with the UE 201, a next generation radio access network (Next Generation Radio Access Network, NG-RAN) 202, a 5G core network (5G-CN)/evolved packet core (EPC) 210, a home subscriber server (HSS)/unified data management (UDM) 220, and an Internet service 230. The 5GS/EPS 200 may be interconnected to other access networks, but for simplicity, these entities/interfaces are not shown. As shown in FIG. 2, the 5GS/EPS 200 provides a packet-switching service. However, a person skilled in the art easily understands that various concepts presented throughout this application may be extended to a network providing a circuit-switching service. The NG-RAN 202 includes an NR NodeB (gNB) 203 and another gNB 204. The gNB 203 provides a user and control plane protocol termination towards the UE 201. The gNB 203 may be connected to the another gNB 204 through an Xn interface (for example, a backhaul). The gNB 203 may also be referred to as a base station, a base transceiver station, a radio base station, a radio transceiver, a transceiver function, a basic service set (BSS), an extended service set (ESS), a transmitter receiver point (TRP), or another suitable terminology. The gNB 203 provides an access point to the 5G-CN/EPC 210 for the UE 201. An example of the UE 201 includes a cellular phone, a smart phone, a session initiation protocol (SIP) phone, a laptop computer, a personal digital assistant (PDA), a satellite radio, a global positioning system, a multimedia apparatus, a video apparatus, a digital audio player (for example, an MP3 player), a camera, a game console, an uncrewed aerial vehicle, an aircraft, a narrowband physical network device, a machine-type communication device, a land vehicle, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable terminology. The gNB 203 is connected to the 5G-CN/EPC 210 through an S1/NG interface. The 5G-CN/EPC 210 includes a mobility management entity (MME)/authentication management field (AMF)/session management function (SMF) 211, another MME/AMF/SMF 214, a service gateway (S-GW)/user plane function (UPF) 212, and a packet data network gateway (P-GW)/UPF 213. The MME/AMF/SMF 211 is a control node that processes signaling between the UE 201 and the 5G-CN/EPC 210. Generally, the MME/AMF/SMF 211 provides bearer and connection management. All user Internet protocol (IP) packets are transmitted by using the S-GW/UPF 212, and the S-GW/UPF 212 is connected to the P-GW/UPF 213. The P-GW provides UE IP address allocation and other functions. The P-GW/UPF 213 is connected to the Internet service 230. The Internet service 230 includes an Internet protocol service corresponding to an operator, and may specifically include an Internet, an intranet, an IP multimedia subsystem (IMS), and a packet switching service.

In an embodiment, the first node in this application includes the UE 201.

In an embodiment, the second node in this application includes the gNB 203.

In an embodiment, a radio link between the UE 201 and the gNB 203 includes a cellular network link.

In an embodiment, a sending end of the first information block includes the gNB 203.

In an embodiment, a receiving end of the first information block includes the UE 201.

In an embodiment, a sending end of the first signal includes the gNB 203.

In an embodiment, a receiving end of the first signal includes the UE 201.

In an embodiment, a sending end of the first signal includes the UE 201.

In an embodiment, a receiving end of the first signal includes the gNB 203.

In an embodiment, a sending end of the first reference signal includes the gNB 203.

In an embodiment, a sending end of the first reference signal includes the gNB 204.

In an embodiment, a receiving end of the first reference signal includes the UE 201.

In an embodiment, the gNB 203 supports SBFD.

In an embodiment, the gNB 203 supports a more flexible duplex mode or full duplex mode.

In an embodiment, the UE 201 supports SBFD.

In an embodiment, the UE 201 supports a more flexible duplex mode or full duplex mode.

### Embodiment 3

Embodiment 3 shows an example of a schematic diagram of an embodiment of radio protocol architectures of a user plane and a control plane according to an embodiment of this application, as shown in FIG. 3.

FIG. 3 is a schematic diagram illustrating an embodiment of radio protocol architectures used for a user plane 350 and a control plane 300. FIG. 3 shows, by using three layers, a radio protocol architecture used for the control plane 300 between a first communication node device (a road side unit (RSU), a vehicle-mounted device, or a vehicle-mounted communication module in a UE or a vehicle to everything (V2X)) and a second node device (a gNB or an RSU, a vehicle-mounted device, or a vehicle-mounted communication module in a UE or a V2X), or between two UEs: a layer 1 (L1), a layer 2 (L2), and a layer 3 (L3). The L1 is the lowest layer and implements various physical layer (PHY) signal processing functions. The L1 is referred to as a PHY 301 in this specification. The L2 305 is above the PHY 301, and is responsible for a link between the first node device and the second node device or between two UEs through the PHY 301. The L2 305 includes a MAC sublayer 302, a radio link control (RLC) sublayer 303, and a packet data convergence protocol (PDCP) sublayer 304, and these sublayers are terminated at the second node device. The PDCP sublayer 304 provides multiplexing between different radio bearers and logical channels. The PDCP sublayer 304 further provides security by encrypting a data packet, and provides handover support of the second communication node device for the first communication node device. The RLC sublayer 303 provides segmentation and reassembly of an upper layer data packet, retransmission of a lost data packet, and reordering of a data packet to compensate for unordered reception caused by a HARQ. The MAC sublayer 302 provides multiplexing between a logical channel and a transport channel. The MAC sublayer 302 is further responsible for allocating various radio resources (for example, resource blocks) in a cell between first communication node devices. The MAC sublayer 302 is further responsible for a HARQ operation. An RRC sublayer 306 in the L3 in the control plane 300 is responsible for obtaining a radio resource (that is, a radio bearer) and configuring a lower layer by using RRC signaling between the second communication node device and the first communication node device. The radio protocol architecture of the user plane 350 includes a layer 1 (L1) and a layer 2 (L2). A radio protocol architecture in the user plane 350 used for the first communication node device and the second communication node device is substantially the same as corresponding layers and sublayers in the control plane 300 for a physical layer 351, a PDCP sublayer 354 in the L2 355, an RLC sublayer 353 in the L2 355, and a MAC sublayer 352 in the L2 355. However, the PDCP sublayer 354 further provides header compression for an upper layer data packet to reduce radio transmission overheads. The L2 355 in the user plane 350 further includes a service data adaptation protocol (SDAP) sublayer 356. The SDAP sublayer 356 is responsible for mapping between a quality of service (QoS) flow and a data radio bearer (DRB), to support diversity of services. Although not shown in the figure, the first communication node device may have several upper layers above the L2 355, including a network layer (for example, an IP layer) terminated at a P-GW on a network side and an application layer terminated at another end (for example, a remote UE or a server) of a connection.

In an embodiment, the radio protocol architecture in FIG. 3 is applicable to the first node in this application.

In an embodiment, the radio protocol architecture in FIG. 3 is applicable to the second node in this application.

In an embodiment, the first information block is generated at the RRC sublayer 306.

In an embodiment, the first information block is generated at the MAC sublayer 302 or the MAC sublayer 352.

In an embodiment, the first information block is generated at the PHY 301 or the PHY 351.

In an embodiment, the first reference signal is generated at the PHY 301 or the PHY 351.

In an embodiment, the first signal is generated at the RRC sublayer 306.

In an embodiment, the first signal is generated at the MAC sublayer 302 or the MAC sublayer 352.

In an embodiment, the first signal is generated at the PHY 301 or the PHY 351.

In an embodiment, the higher layer in this application is a layer above the physical layer.

### Embodiment 4

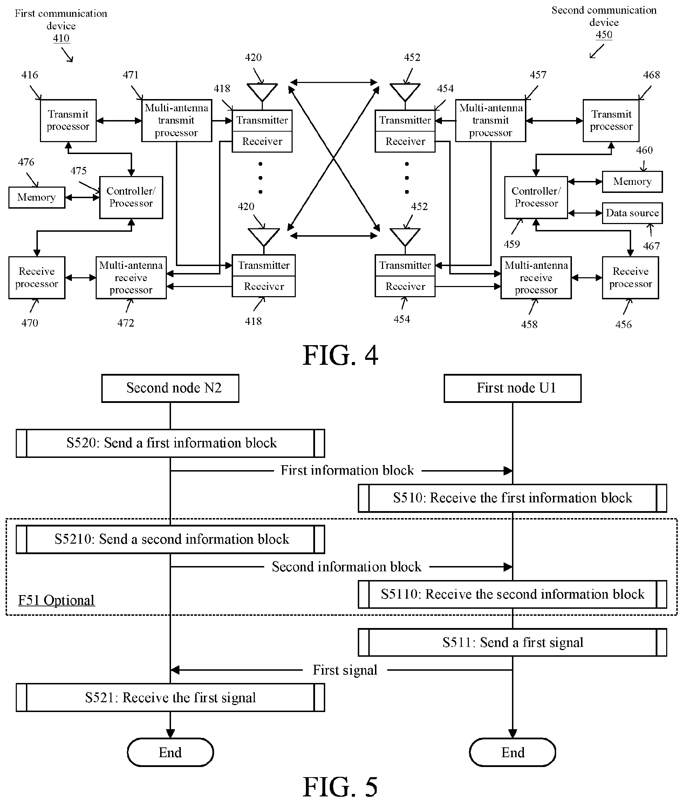

Embodiment 4 shows an example of a schematic diagram of a first communication device and a second communication device according to an embodiment of this application, as shown in FIG. 4. FIG. 4 is a block diagram of a first communication device 410 and a second communication device 450 communicating with each other in an access network.

The first communication device 410 includes a controller/processor 475, a memory 476, a receive processor 470, a transmit processor 416, a multi-antenna receive processor 472, a multi-antenna transmit processor 471, transmitters/receivers 418, and antennas 420.

The second communication device 450 includes a controller/processor 459, a memory 460, a data source 467, a transmit processor 468, a receive processor 456, a multi-antenna transmit processor 457, a multi-antenna receive processor 458, transmitters/receivers 454, and antennas 452.

During transmission from the first communication device 410 to the second communication device 450, at the first communication device 410, an upper layer data packet from a core network is provided to the controller/processor 475. The controller/processor 475 implements functionality of L2. In a DL, the controller/processor 475 provides header compression, encryption, packet segmentation and reordering, multiplexing between a logical channel and a transport channel, and radio resource allocation for the second communication device 450 based on various priority measures. The controller/processor 475 is further responsible for a HARQ operation, retransmission of a lost packet, and signaling to the second communication device 450. The transmit processor 416 and the multi-antenna transmit processor 471 implement various signal processing functions used for L1 (that is, a physical layer). The transmit processor 416 implements encoding and interleaving to promote forward error correction (FEC) at the second communication device 450, and mapping of signal clusters based on various modulation schemes (such as binary phase shift keying (BPSK), quadrature phase shift keying (QPSK), M-phase shift keying (M-PSK), and M-quadrature amplitude modulation (M-QAM)). The multi-antenna transmit processor 471 performs digital spatial precoding on an encoded and modulated symbol, including codebook-based precoding, non-codebook-based precoding, and beamforming, to generate one or more parallel streams. Then, the transmit processor 416 maps each parallel stream to a subcarrier, multiplexes a modulated symbol with a reference signal (for example, a pilot) in time domain and/or frequency domain, and then uses inverse fast Fourier transform (IFFT) to generate a physical channel carrying a time domain multi-carrier symbol stream. Subsequently, the multi-antenna transmit processor 471 performs transmission analog precoding/beamforming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the first communication device 410 to the second communication device 450, at the second communication device 450, each receiver 454 receives a signal by using a corresponding antenna 452 thereof. Each receiver 454 recovers information modulated onto a radio frequency carrier, converts the radio frequency stream into a baseband multi-carrier symbol stream, and provides the baseband multi-carrier symbol stream to the receive processor 456. The receive processor 456 and the multi-antenna receive processor 458 implement various signal processing functions of the L1. The multi-antenna receive processor 458 performs reception analog precoding/beamforming operation on the baseband multi-carrier symbol stream from the receiver 454. The receive processor 456 converts, from time domain to frequency domain by using fast Fourier transform (FFT), a baseband multi-carrier symbol stream obtained through the reception analog precoding/beamforming operation. In frequency domain, a data signal at the physical layer and a reference signal are demultiplexed by the receive processor 456. The reference signal is used for channel estimation. After multi-antenna detection is performed on the data signal in the multi-antenna receive processor 458, any parallel stream that uses the second communication device 450 as a destination is recovered. A symbol in each parallel stream is demodulated and recovered in the receive processor 456, and soft decision is generated. Subsequently, the receive processor 456 decodes and deinterleaves the soft decision to recover an upper layer data and a control signal that are transmitted by the first communication device 410 on the physical channel. Subsequently, the upper layer data and the control signal are provided to the controller/processor 459. The controller/processor 459 implements a function of the L2. The controller/processor 459 may be associated with the memory 460 that stores program code and data. The memory 460 may be referred to as a computer-readable medium. In the DL, the controller/processor 459 provides demultiplexing, packet reassembly, decryption, header decompression, and control signal processing between a transport channel and a logical channel to recover the upper layer data packet from the core network. Subsequently, the upper layer data packet is provided to all protocol layers above the L2. Various control signals may alternatively be provided to L3 for processing of the L3. The controller/processor 459 is further responsible for performing error detection by using an acknowledgement (ACK) and/or negative acknowledgement (NACK) protocol to support the HARQ operation.

During transmission from the second communication device 450 to the first communication device 410, at the second communication device 450, the data source 467 is used to provide the upper layer data packet to the controller/processor 459. The data source 467 indicates all protocol layers above the L2. Similar to the sending function at the first communication device 410 described in the DL, the controller/processor 459 implements, based on radio resource allocation of the first communication device 410, header compression, encryption, packet segmentation and reordering, multiplexing between a logical channel and a transport channel, and implements a function of the L2 for the user plane and the control plane. The controller/processor 459 is further responsible for the HARQ operation, retransmission of a lost packet, and signaling to the first communication device 410. The transmit processor 468 performs modulation mapping and channel coding. The multi-antenna transmit processor 457 performs digital multi-antenna spatial precoding, including codebook-based precoding, non-codebook-based precoding, and beamforming. Subsequently, the transmit processor 468 modulates a generated parallel stream into a multi-carrier/single-carrier symbol stream. After an analog precoding/beamforming operation is performed on the multi-carrier/single-carrier symbol stream in the multi-antenna transmit processor 457, the transmitter 454 provides the multi-carrier/single-carrier symbol stream to the different antennas 452. Each transmitter 454 first converts a baseband symbol stream provided by the multi-antenna transmit processor 457 into a radio frequency symbol stream, and then provides the radio frequency symbol stream to the antennas 452.

During transmission from the second communication device 450 to the first communication device 410, a function of the first communication device 410 is similar to a receiving function of the second communication device 450 described during transmission from the first communication device 410 to the second communication device 450. Each receiver 418 receives a radio frequency signal by using a corresponding antenna 420 thereof, converts the received radio frequency signal into a baseband signal, and provides the baseband signal to the multi-antenna receive processor 472 and the receive processor 470. The receive processor 470 and the multi-antenna receive processor 472 jointly implement a function of the L1. The controller/processor 475 implements the function of the L2. The controller/processor 475 may be associated with the memory 476 that stores program code and data. The memory 476 may be referred to as a computer-readable medium. The controller/processor 475 provides demultiplexing, packet reassembly, decryption, header decompression, and control signal processing between a transport channel and a logical channel to recover the upper layer data packet from the second communication device 450. The upper layer data packet from the controller/processor 475 may be provided to the core network. The controller/processor 475 is further responsible for performing error detection by using an ACK and/or NACK protocol to support the HARQ operation.

In an embodiment, the second communication device 450 includes at least one processor and at least one memory. The at least one memory includes computer program code. The at least one memory and the computer program code are configured to be used with the at least one processor together. The second communication device 450 receives at least a first information block, where the first information block is configured to determine a first time domain resource, and the first time domain resource includes at least one symbol; and receives a first signal or sends a first signal, where a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

In an embodiment, the second communication device 450 includes a memory storing a computer readable instruction program, and the computer readable instruction program generates actions when being executed by the at least one processor. The actions include: receiving the first information block; and receiving a first signal or sending a first signal.

In an embodiment, the first communication device 410 includes at least one processor and at least one memory. The at least one memory includes computer program code. The at least one memory and the computer program code are configured to be used with the at least one processor together. The first communication device 410 receives at least a first information block, where the first information block is configured to determine a first time domain resource, and the first time domain resource includes at least one symbol; and sends a first signal or receives a first signal, where a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

In an embodiment, first communication device 410 includes a memory storing a computer readable instruction program, and the computer readable instruction program generates actions when being executed by the at least one processor. The actions include: sending the first information block; and sending a first signal or receiving a first signal.

In an embodiment, the first node in this application includes the second communication device 450.

In an embodiment, the second node in this application includes the first communication device 410.

In an embodiment, at least one of {the antenna 420, the transmitter 418, the transmit processor 416, the multi-antenna transmit processor 471, the controller/processor 475, and the memory 476} is configured to send the first information block.

In an embodiment, at least one of {the antenna 452, the receiver 454, the receive processor 456, the multi-antenna receive processor 458, the controller/processor 459, the memory 460, and the data source 467} is configured to receive the first information block.

In an embodiment, at least one of {the antenna 420, the transmitter 418, the transmit processor 416, the multi-antenna transmit processor 471, the controller/processor 475, and the memory 476} is configured to send the first signal.

In an embodiment, at least one of {the antenna 452, the receiver 454, the receive processor 456, the multi-antenna receive processor 458, the controller/processor 459, the memory 460, and the data source 467} is configured to receive the first signal.

In an embodiment, at least one of {the antenna 452, the transmitter 454, the transmit processor 468, the multi-antenna transmit processor 457, the controller/processor 459, the memory 460, and the data source 467} is configured to send the first signal.

In an embodiment, at least one of {the antenna 420, the receiver 418, the receive processor 470, the multi-antenna receive processor 472, the controller/processor 475, and the memory 476} is configured to receive the first signal.

### Embodiment 5

Embodiment 5 shows an example of a first flowchart of transmission between a first node and a second node according to an embodiment of this application. In FIG. 5, a first node U1 communicates with a second node N2 through a radio link. It should be particularly noted that a sequence in this embodiment is not intended to limit a signal transmission sequence and an implementation sequence in this application. In FIG. 5, steps in a box F51 are optional.

For the first node U1, step S510: Receive a first information block. Step S5110: Receive a second information block. Step S511: Send a first signal.

For the second node N2, step S520: Send the first information block. Step S5210: Send the second information block. Step S521: Receive the first signal.

In Embodiment 5, the first information block is used by the first node U1 to determine a first time domain resource, and the first time domain resource includes at least one symbol. A first reference signal is used by the first node U1 to determine a spatial relationship of the first signal, the first reference signal is used to determine the first PCI, the first reference signal includes a synchronization signal, and whether the first time domain resource and the first reference signal overlap in time domain is related to the first PCI.

In an embodiment, the first node U1 is the first node in this application.

In an embodiment, the second node N2 is the second node in this application.

In an embodiment, an air interface between the second node N2 and the first node U1 includes a wireless interface between a base station device and a user equipment.

In an embodiment, an air interface between the second node N2 and the first node U1 includes a wireless interface between a relay node device and a user equipment.

In an embodiment, an air interface between the second node N2 and the first node U1 includes a wireless interface between user equipments.

In an embodiment, the steps in the box F51 in FIG. 5 exist. The second information block indicates configuration information of the first reference signal.

In an embodiment, the configuration information of the first reference signal includes one or more of an occupied time domain resource, a periodicity, transmit power, a synchronization signal sequence, or a subcarrier spacing.

In an embodiment, the second information block is sent in a cell identified by using the first PCI.

In an embodiment, the second information block is sent in a cell identified by using the second PCI.

In an embodiment, the second information block is carried in higher layer signaling.

In an embodiment, the second information block is carried in RRC signaling.

In an embodiment, the second information block includes information in all or a part of fields in an RRC IE.

In an embodiment, the second information block includes information in all or a part of fields in a SIB1 IE.

In an embodiment, the second information block includes information in all or a part of fields in a ServingCellConfigCommon IE.

In an embodiment, the second information block includes information in all or a part of fields in a ServingCellConfigCommonSIB IE.

In an embodiment, the second information block includes information in all or a part of fields in a ServingCellConfig IE.

In an embodiment, the second information block includes information in all or a part of fields in a MimoParam-r17 IE.

In an embodiment, the second information block includes information in all or a part of fields in an SSB-MTC-AdditionalPCI IE.

In an embodiment, the second information block is carried in an RRC IE.

In an embodiment, the second information block is carried in a SIB1 IE.

In an embodiment, the second information block is carried in a ServingCellConfigCommon IE.

In an embodiment, the second information block is carried in a ServingCellConfigCommonSIB IE.

In an embodiment, the second information block is carried in a ServingCellConfig IE.

In an embodiment, the second information block is carried in a MimoParam-r17 IE.

In an embodiment, the second information block is carried in an SSB-MTC-AdditionalPCI IE.

In an embodiment, the second information block is carried in a MAC CE.

In an embodiment, the second information block is carried in physical layer signaling.

In an embodiment, one occurrence of the first reference signal in time domain is earlier than that of the first information block.

In an embodiment, one occurrence of the first reference signal in time domain is later than that of the first information block.

In an embodiment, one occurrence of the first reference signal in time domain is earlier than that of the second information block.

In an embodiment, one occurrence of the first reference signal in time domain is later than that of the second information block.

In an embodiment, one occurrence of the first reference signal in time domain is earlier than that of the first signal.

In an embodiment, one occurrence of the first reference signal in time domain is later than that of the first signal.

In an embodiment, the first information block is earlier than the second information block in time domain.

In an embodiment, the first information block is later than the second information block in time domain.

In an embodiment, the first information block is transmitted on a PDSCH.

In an embodiment, the second information block is transmitted on a PDSCH.

In an embodiment, the first signal is transmitted on a PUSCH.

In an embodiment, the first signal is transmitted on a PUCCH.

### Embodiment 6

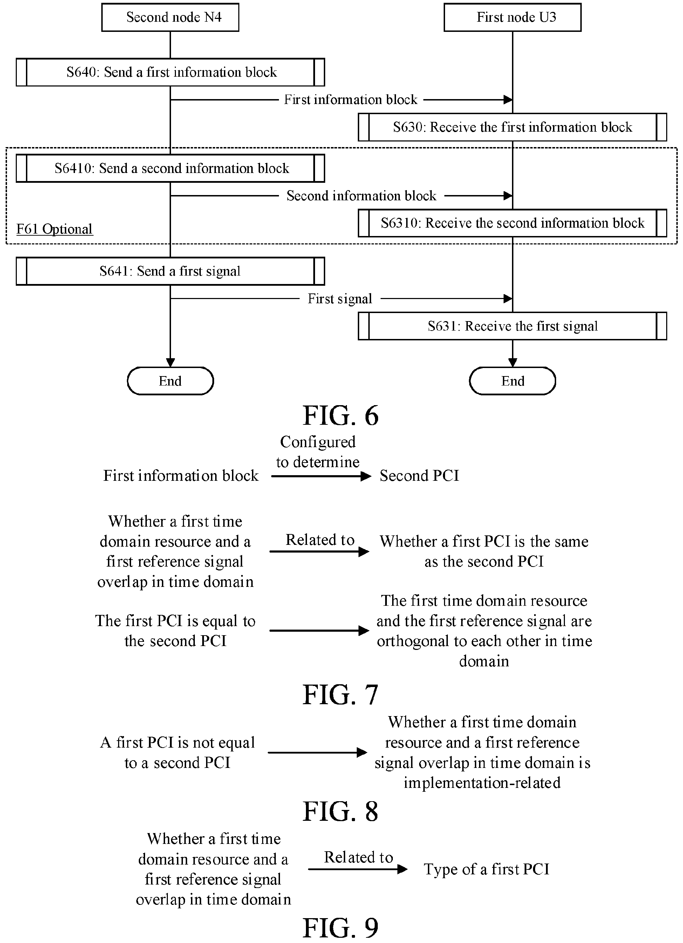

Embodiment 6 shows an example of a flowchart of transmission between a first node and a second node according to another embodiment of this application. In FIG. 6, a first node U3 communicates with a second node N4 by through a radio link. It should be particularly noted that a sequence in this embodiment is not intended to limit a signal transmission sequence and an implementation sequence in this application. In FIG. 6, steps in a box F61 are optional.

For the first node U3, step S630: Receive a first information block. Step S6110: Receive a second information block. Step S511: Receive a first signal.

For the second node N4, step S640: Send the first information block. Step S6210: Send the second information block. Step S521: Send a first signal.

In Embodiment 6, the first information block is used by the first node U3 to determine a first time domain resource, and the first time domain resource includes at least one symbol. A first reference signal is used by the first node U3 to determine a spatial relationship of the first signal, the first reference signal is used to determine the first PCI, the first reference signal includes a synchronization signal, and whether the first time domain resource and the first reference signal overlap in time domain is related to the first PCI.

In an embodiment, the first node U3 is the first node in this application.

In an embodiment, the second node N4 is the second node in this application.

In an embodiment, an air interface between the second node N4 and the first node U3 includes a wireless interface between a base station device and a user equipment.

In an embodiment, an air interface between the second node N4 and the first node U3 includes a wireless interface between a relay node device and user equipment.

In an embodiment, an air interface between the second node N4 and the first node U3 includes a wireless interface between user equipments.

In an embodiment, the steps in the box F61 in FIG. 6 exist. The second information block indicates configuration information of the first reference signal.

In an embodiment, the first information block is earlier than the second information block in time domain.

In an embodiment, the first information block is later than the second information block in time domain.

In an embodiment, the first information block is transmitted on a PDSCH.

In an embodiment, the second information block is transmitted on a PDSCH.

In an embodiment, the first signal is transmitted on a PDSCH.

In an embodiment, the first signal is transmitted on a PDCCH.

### Embodiment 7

Embodiment 7 shows an example of a schematic diagram of a first information block being configured to determine a second PCI according to an embodiment of this application. As shown in FIG. 7, the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

In an embodiment, the first information block includes information in all or a part of fields in an RRC IE.

In an embodiment, the first information block includes information in all or a part of fields in a CellGroupConfig IE.

In an embodiment, the first information block includes information in all or a part of fields in an SpCellConfig IE.

In an embodiment, the first information block includes information in all or a part of fields in a CellGroupConfig IE.

In an embodiment, the first information block includes information in all or a part of fields in an SCellConfig IE.

In an embodiment, the first information block is carried in an RRC IE.

In an embodiment, the second information block is carried in a CellGroupConfig IE.

In an embodiment, the second information block is carried in an SpCellConfig IE.

In an embodiment, a servCellIndex field in the second information block is used for determining the second PCI.

In an embodiment, the second information block is carried in an SCellConfig IE.

In an embodiment, an SCellIndex field in the second information block is used for determining the second PCI.

In an embodiment, an sCellToAddModList field in the second information block is used for determining the second PCI.

In an embodiment, the second PCI is explicitly indicated in the second information block.

In an embodiment, the second PCI is implicitly indicated in the second information block.

In an embodiment, the second information block indicates a cell index, and the cell index is used for determining the second PCI.

In an embodiment, the cell index includes SCellIndex.

In an embodiment, the cell index includes ServCellIndex.

In an embodiment, a cell identified by using the second PCI is a serving cell of the first node.

In an embodiment, that a cell identified by using the second PCI is a serving cell of the first node includes: The first node performs SCell addition for a cell identified by using the second PCI.

In an embodiment, that a cell identified by using the second PCI is a serving cell of the first node includes: A cell identified by using the second PCI is configured by using an sCellToAddModList IE.

In an embodiment, that a cell identified by using the second PCI is a serving cell of the first node includes: The first node is allocated SCellIndex for a cell identified by using the second PCI.

In an embodiment, that a cell identified by using the second PCI is a serving cell of the first node includes: The first node is allocated ServCellIndex for a cell identified by using the second PCI.

In an embodiment, that a cell identified by using the second PCI is a serving cell of the first node includes: An RRC connection is already established between the first node and a cell identified by using the second PCI.

In an embodiment, that a cell identified by using the second PCI is a serving cell of the first node includes: A C-RNTI of the first node is allocated by using a cell identified by using the second PCI.

In an embodiment, a cell identified by using the second PCI is a special cell (SpCell) of the first node.

In an embodiment, a cell identified by using the second PCI is a primary cell (PCell) of the first node.

In an embodiment, a cell identified by using the second PCI is a secondary cell (SCell) of the first node.

In an embodiment, when a cell is configured by using a sCellToAddModList IE, the cell is a serving cell. When a cell is an SpCell, the cell is a serving cell.

In an embodiment, when a cell is neither configured by using an sCellToAddModList IE nor an SpCell, the cell is not a serving cell.

In an embodiment, when a cell is neither configured by using a sCellToAddModList IE nor an SpCell, the cell is an additional cell or an auxiliary cell.

In an embodiment, when the first PCI is equal to the second PCI, a cell identified by using the first PCI is a serving cell of the first node.

In an embodiment, when the first PCI is equal to the second PCI, a cell identified by using the first PCI is an SpCell, or a cell identified by using the first PCI is configured by using an sCellToAddModList IE.

In an embodiment, when the first PCI is equal to the second PCI, the first node does not expect the first time domain resource and the first reference signal to overlap in time domain.

In an embodiment, when the first PCI is equal to the second PCI, and the first time domain resource and the first reference signal overlap in time domain, the first node considers that an error occurs.

### Embodiment 8

Embodiment 8 shows an example of a schematic diagram showing whether a first time domain resource and a first reference signal overlap in time domain according to an embodiment of this application. As shown in FIG. 8, when the first PCI is not equal to the second PCI, whether the first time domain resource and the first reference signal overlap in time domain is implementation-related.

In an embodiment, when the first PCI is not equal to the second PCI, a cell identified by using the first PCI is not a serving cell of the first node.

In an embodiment, that a cell identified by using the first PCI is not a serving cell of the first node includes: The first node does not perform secondary serving cell addition for a cell identified by using the first PCI.

In an embodiment, that a cell identified by using the first PCI is not a serving cell of the first node includes: sCellToAddModList most recently received by the first node does not include a cell identified by using the first PCI.

In an embodiment, that a cell identified by using the first PCI is not a serving cell of the first node includes: Neither sCellToAddModList nor sCellToAddModListSCG most recently received by the first node includes a cell identified by using the first PCI.

In an embodiment, that a cell identified by using the first PCI is not a serving cell of the first node includes: The first node is not allocated SCellIndex for a cell identified by using the first PCI.

In an embodiment, that a cell identified by using the first PCI is not a serving cell of the first node includes: The first node is not allocated ServCellIndex for a cell identified by using the first PCI.

In an embodiment, that a cell identified by using the first PCI is not a serving cell of the first node includes: No RRC connection is established between the first node and a cell identified by using the first PCI.

In an embodiment, that a cell identified by using the first PCI is not a serving cell of the first node includes: A C-RNTI of the first node is not allocated by a cell identified by using the first PCI.

In an embodiment, when the first PCI is not equal to the second PCI, a cell identified by using the first PCI is an additional cell or an auxiliary cell.

In an embodiment, when the first PCI is not equal to the second PCI, a cell identified by using the first PCI is neither configured by using an sCellToAddModList IE nor an SpCell.

In an embodiment, when the first PCI is not equal to the second PCI, a sending end of the first information block determines whether the first time domain resource and the first reference signal overlap in time domain.

In an embodiment, when the first PCI is not equal to the second PCI, the first time domain resource and the first reference signal overlap in time domain.

In an embodiment, when the first PCI is not equal to the second PCI, and the first time domain resource and the first reference signal overlap in time domain, the first node does not consider that an error occurs.

In an embodiment, when the first PCI is not equal to the second PCI, the first time domain resource and the first reference signal are orthogonal in time domain.

### Embodiment 9

Embodiment 9 shows an example of a schematic diagram showing whether a first time domain resource and a first reference signal overlap in time domain being related to a type of a first PCI according to an embodiment of this application. As shown in FIG. 9, whether the first time domain resource and the first reference signal overlap in time domain is related to the type of the first PCI.

In an embodiment, that whether the first time domain resource and the first reference signal overlap in time domain is related to the type of the first PCI includes: Whether the first time domain resource and the first reference signal overlap in time domain is related to whether the first PCI is a serving cell PCI or an additional PCI.

In an embodiment, when the first PCI is a serving cell PCI, the first time domain resource and the first reference signal are orthogonal in time domain.

In an embodiment, when the first PCI is a serving cell PCI, the first node does not expect the first time domain resource and the first reference signal to overlap in time domain.

In an embodiment, when the first PCI is a serving cell PCI, and the first time domain resource and the first reference signal overlap in time domain, the first node considers that an error occurs.

In an embodiment, when the first PCI is an additional PCI, whether the first time domain resource and the first reference signal overlap in time domain is implementation-related.

In an embodiment, when the first PCI is an additional PCI, a sending end of the first information block determines whether the first time domain resource and the first reference signal overlap in time domain.

In an embodiment, when the first PCI is an additional PCI, the first time domain resource and the first reference signal overlap in time domain.

In an embodiment, when the first PCI is an additional PCI, and the first time domain resource and the first reference signal overlap in time domain, the first node does not consider that an error occurs.

In an embodiment, that whether the first time domain resource and the first reference signal overlap in time domain is related to the type of the first PCI includes: Whether the first time domain resource and the first reference signal overlap in time domain is related to whether the first PCI corresponds to ServCellIndex.

In an embodiment, when the first PCI corresponds to *ServCellIndex,* the first time domain resource and the first reference signal are orthogonal in time domain.

In an embodiment, when the first PCI corresponds to *ServCellIndex,* the first node does not expect the first time domain resource and the first reference signal to overlap in time domain.

In an embodiment, when the first PCI corresponds to *ServCellIndex,* and the first time domain resource and the first reference signal overlap in time domain, the first node considers that an error occurs.

In an embodiment, when the first node is not allocated *ServCellIndex* for a cell identified by using the first PCI, the first time domain resource and the first reference signal overlap in time domain is implementation-related.

In an embodiment, when the first node is not allocated *ServCellIndex* for a cell identified by using the first PCI, a sending end of the first information block determines whether the first time domain resource and the first reference signal overlap in time domain.

In an embodiment, when the first node is not allocated *ServCellIndex* for a cell identified by using the first PCI, the first time domain resource and the first reference signal overlap in time domain.

In an embodiment, when the first node is not allocated *ServCellIndex* for a cell identified by using the first PCI, and the first time domain resource and the first reference signal overlap in time domain, the first node does not consider that an error occurs.

In an embodiment, ServCellIndex is a non-negative integer not greater than 31.

In an embodiment, that whether the first time domain resource and the first reference signal overlap in time domain is related to the type of the first PCI includes: Whether the first time domain resource and the first reference signal overlap in time domain is related to whether the first PCI corresponds to SCellIndex.

In an embodiment, when the first PCI corresponds to SCellIndex, the first time domain resource and the first reference signal are orthogonal in time domain.

In an embodiment, when the first PCI corresponds to SCellIndex, the first node does not expect the first time domain resource and the first reference signal to overlap in time domain.

In an embodiment, when the first PCI corresponds to SCellIndex, and the first time domain resource and the first reference signal overlap in time domain, the first node considers that an error occurs.

In an embodiment, when the first node is not allocated SCellIndex for a cell identified by using the first PCI, whether the first time domain resource and the first reference signal overlap in time domain is implementation-related.

In an embodiment, when the first node is not allocated SCellIndex for a cell identified by using the first PCI, a sending end of the first information block determines whether the first time domain resource and the first reference signal overlap in time domain.

In an embodiment, when the first node is not allocated SCellIndex for a cell identified by using the first PCI, the first time domain resource and the first reference signal overlap in time domain.

In an embodiment, when the first node is not allocated SCellIndex for a cell identified by using the first PCI, and the first time domain resource and the first reference signal overlap in time domain, the first node does not consider that an error occurs.

In an embodiment, SCellIndex is a positive integer not greater than 31.

### Embodiment 10

Embodiment 10 shows an example of a schematic diagram of a first node receiving a first reference signal or sending a second signal according to an embodiment of this application. The first node receives the first reference signal in a first symbol set or sends the second signal in a first symbol set; the first time domain resource and the first reference signal overlap in time domain; a time domain resource occupied by the first reference signal includes the first symbol set; and a time domain resource allocated to the second signal includes the first symbol set.

In an embodiment, the first symbol set includes at least one symbol.

In an embodiment, the first symbol set includes one symbol.

In an embodiment, the first symbol set includes a plurality of consecutive symbols.

In an embodiment, the first symbol set includes a plurality of nonconsecutive symbols.

In an embodiment, the first symbol set includes at least one slot.

In an embodiment, the first symbol set includes at least one subframe.

In an embodiment, the first symbol set is configured by RRC.

In an embodiment, the first symbol set includes a time domain resource allocated to the second signal.

In an embodiment, the first symbol set includes a time domain resource occupied by the first reference signal.

In an embodiment, the first symbol set includes the first time domain resource.

In an embodiment, the first time domain resource includes the first symbol set.

In an embodiment, the first symbol set and the first time domain resource overlap in time domain.

In an embodiment, the first symbol set includes at least one symbol belonging to the first time domain resource.

In an embodiment, any symbol in the first symbol set belongs to the first time domain resource.

In an embodiment, the first symbol set includes at least one symbol that does not belong to the first time domain resource.

In an embodiment, the first time domain resource includes at least one symbol that does not belong to the first symbol set.

In an embodiment, the second signal includes a baseband signal.

In an embodiment, the second signal includes a radio signal.

In an embodiment, the second signal includes a radio frequency signal.

In an embodiment, the second signal includes a signal transmitted on a physical channel.

In an embodiment, the second signal includes a signal transmitted on a physical layer control channel.

In an embodiment, the second signal includes a signal transmitted on a PUCCH.

In an embodiment, the second signal is transmitted on a PUCCH, and a CRC of the second signal is scrambled by a C-RNTI.

In an embodiment, the second signal is transmitted on a PUCCH, and a C-RNTI is used for generating a scrambling code sequence of the first signal.

In an embodiment, the second signal includes a signal transmitted on a physical layer shared channel.

In an embodiment, the second signal includes a signal transmitted on a PUSCH.

In an embodiment, the second signal is transmitted on a PUSCH, and a CRC that is of scheduling DCI and that is of the second signal is scrambled by a C-RNTI.

In an embodiment, the second signal is transmitted on a PUSCH, and a C-RNTI is used for generating a scrambling code sequence of the second signal.

In an embodiment, the first reference signal and the second signal occupy a same one or more symbols.

In an embodiment, the first reference signal is configured to occupy one or more symbols that are the same as those of the second signal.

In an embodiment, a resource of the first reference signal is configured to occupy one or more symbols that are the same as those of the second signal.

In an embodiment, one or more symbols configured for the first reference signal are occupied by the second signal.

In an embodiment, one or more symbols configured for the first reference signal resource are occupied by the second signal.

In an embodiment, all symbols occupied by the first reference signal are occupied by the second signal.

In an embodiment, at least one symbol occupied by the first reference signal is not occupied by the second signal.

In an embodiment, at least one occurrence of the first reference signal resource in time domain and the second signal occupy time resources that are orthogonal to each other.

In a sub-embodiment of the foregoing embodiment, the first reference signal and any one of the at least one occurrence are orthogonal in time domain.

In an embodiment, the first node determines whether to receive the first reference signal or send the second signal in the first symbol set.

In an embodiment, a priority of the second signal is used to determine whether the first node receives the first reference signal or sends the second signal in the first symbol set.

In an embodiment, a second reference signal resource set is used to determine a spatial relationship of the second signal, and whether the first node receives the first reference signal or sends the second signal in the first symbol set is related to the second reference signal resource set.

In an embodiment, the second reference signal resource set includes a second reference signal resource, a second reference signal is transmitted in the second reference signal resource, and the second reference signal is used for determining a spatial relationship of the second signal.

In an embodiment, the second reference signal includes a synchronization signal.

In an embodiment, the second reference signal includes an SS/PBCH block.

In an embodiment, the second reference signal is an SS/PBCH block.

In an embodiment, that the second reference signal is used for determining a spatial relationship of the second signal includes: The second reference signal and the second signal are quasi co-located.

In an embodiment, that the second reference signal is used for determining a spatial relationship of the second signal includes: For the second reference signal and the second signal, the first node assumes that a same spatial characteristic is used for receiving the second reference signal and sending the second signal.

In an embodiment, that the second reference signal is used for determining a spatial relationship of the second signal includes: A large-scale property of a channel experienced by the first signal may be deduced from a large-scale property experienced by the second reference signal.

In an embodiment, that the second reference signal is used for determining a spatial relationship of the second signal includes: The first node receives the second reference signal and sends the second signal by using a same spatial domain filter.

In an embodiment, the second reference signal is used for determining a third PCI.

In an embodiment, the third PCI is a non-negative integer.

In an embodiment, the third PCI is a non-negative integer not greater than 1007.

In an embodiment, a sending end of the second reference signal is a cell identified by using the third PCI.

In an embodiment, an SS sequence included in the second reference signal indicates the third PCI.

In an embodiment, a PSS sequence and an SSS sequence included in the second reference signal jointly indicate the third PCI.

In an embodiment, an PSS sequence included in the second reference signal indicates the third PCI.

In an embodiment, an SSS sequence included in the second reference signal indicates the third PCI.

In an embodiment, the first node can undoubtedly obtain the third PCI from an SS sequence of the second reference signal.

In an embodiment, when the third PCI is equal to the second PCI, the first node receives the first reference signal in the first symbol set.

In an embodiment, when the third PCI is equal to the first PCI, the first node sends the second signal in the first symbol set.

In an embodiment, the physical channel occupied by the second signal is used for determining whether the first node receives the first reference signal or sends the second signal in the first symbol set.

In an embodiment, the second signal is transmitted on a PUCCH, and the first node sends the second signal in the first symbol set.

In an embodiment, the second signal is transmitted on a PUCCH, and the first node receives the first reference signal in the first symbol set.

In an embodiment, the second signal is transmitted on a PUSCH, and the first node sends the second signal in the first symbol set.

In an embodiment, the second signal is transmitted on a PUSCH, and the first node receives the first reference signal in the first symbol set.

In an embodiment, the second signal is transmitted on a physical random access channel (PRACH), and the first node sends the second signal in the first symbol set.

In an embodiment, the second signal is transmitted on a PRACH, and the first node receives the first reference signal in the first symbol set.

In an embodiment, the second signal is transmitted based on a dynamically scheduled PUSCH, and the first node sends the second signal in the first symbol set.

In an embodiment, the second signal is transmitted based on a dynamically scheduled PUSCH, and the first node receives the first reference signal in the first symbol set.

In an embodiment, the second signal is transmitted based on a configured grant PUSCH, and the first node sends the second signal in the first symbol set.

In an embodiment, the second signal is transmitted based on a configured grant PUSCH, and the first node receives the first reference signal in the first symbol set.

In an embodiment, the second signal is transmitted based on a dynamic scheduled PUSCH with a repetition type A, and the first node sends the second signal in the first symbol set.

In an embodiment, the second signal is transmitted based on a dynamic scheduled PUSCH with a repetition type A, and the first node receives the first reference signal in the first symbol set.

In an embodiment, the second signal is transmitted based on a configured grant PUSCH with a repetition type A, and the first node sends the second signal in the first symbol set.

In an embodiment, the second signal is transmitted based on a configured grant PUSCH with a repetition type A, and the first node receives the first reference signal in the first symbol set.

In an embodiment, the second signal is transmitted based on a dynamic scheduled PUSCH with a repetition type B, and the first node sends the second signal in the first symbol set.

In an embodiment, the second signal is transmitted based on a dynamic scheduled PUSCH with a repetition type B, and the first node receives the first reference signal in the first symbol set.

In an embodiment, the second signal is transmitted based on a configured grant PUSCH with a repetition type B, and the first node sends the second signal in the first symbol set.

In an embodiment, the second signal is transmitted based on a configured grant PUSCH with a repetition type B, and the first node receives the first reference signal in the first symbol set.

In an embodiment, the second signal carries a first bit block, the first bit block includes uplink control information (UCI), and the first node sends the second signal in the first symbol set.

In an embodiment, the first bit block includes channel state information (CSI).

In an embodiment, the first bit block includes a hybrid automatic repeat request-acknowledgement (HARQ-ACK).

In an embodiment, the HARQ-ACK includes an ACK.

In an embodiment, the HARQ-ACK includes a negative ACK (NACK).

In an embodiment, the first bit block includes scheduling request (SR) information.

### Embodiment 11

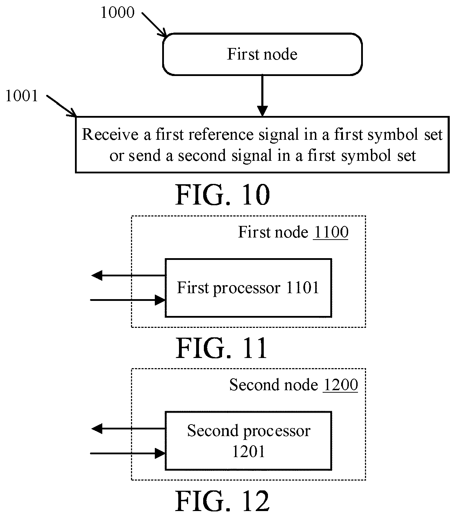

Embodiment 11 shows an example of a block diagram of a structure of a processing apparatus used in a first node according to an embodiment of this application, as shown in FIG. 11. In FIG. 11, the processing apparatus 1100 in the first node includes a first processor 1101.

In Embodiment 11, the first processor 1101 receives first information, and receives a first signal or sends a first signal, where the first information block is used for determining a first time domain resource, the first time domain resource includes at least one symbol, a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

In an embodiment, the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

In an embodiment, when the first PCI is not equal to the second PCI, whether the first time domain resource and the first reference signal overlap in time domain is implementation-related.

In an embodiment, whether the first time domain resource and the first reference signal overlap in time domain is related to a type of the first PCI.

In an embodiment, the first processor 1101 receives a second information block. The second information block indicates configuration information of the first reference signal.

In an embodiment, the first processor 1101 receives the first reference signal in a first symbol set or sends a second signal in a first symbol set; the first time domain resource and the first reference signal overlap in time domain; a time domain resource occupied by the first reference signal includes the first symbol set; and a time domain resource allocated to the second signal includes the first symbol set.

In an embodiment, the first node is a user equipment.

In an embodiment, the first node is a relay node device.

In an embodiment, a sending end of the first signal block simultaneously receives and sends radio signals in the at least one symbol in the first time domain resource.

In an embodiment, when the first PCI is equal to the second PCI, the first node does not expect the first time domain resource and the first reference signal to overlap in time domain. When the first time domain resource and the first signal overlap in time domain, the first node 1100 considers that an error occurs.

In an embodiment, when the first PCI is not equal to the second PCI, a sending end of the first information block determines whether the first time domain resource and the first reference signal overlap in time domain. When the first time domain resource and the first reference signal overlap in time domain, the first node 1100 does not consider that an error occurs. When the first time domain resource and the first reference signal overlap in time domain, the first node 1100 determines whether to receive the first reference signal. In an embodiment, the first processor 1101 includes at least one of {the antenna 452, the receiver 454, the receive processor 456, the multi-antenna receive processor 458, the controller/processor 459, the memory 460, the data source 467} in Embodiment 4.

In an embodiment, the first processor 1101 includes at least one of {the antenna 452, the transmitter 454, the transmit processor 468, the multi-antenna transmit processor 457, the controller/processor 459, the memory 460, the data source 467} in Embodiment 4.

### Embodiment 12

Embodiment 12 shows an example of a block diagram of a structure of a processing apparatus used in a second node according to an embodiment of this application, as shown in FIG. 12. In FIG. 12, the processing apparatus 1200 in the second node includes a second processor 1201.

In Embodiment 12, the second processor 1201 sends a first information block, and sends a first signal or receives a first signal, where the first information block is used for determining a first time domain resource, the first time domain resource includes at least one symbol, a first reference signal is used for determining a spatial relationship of the first signal, the first reference signal is used for determining a first PCI, the first reference signal includes a synchronization signal, and whether the first time domain resource and the first reference signal overlap in time domain is related to the first PCI.

In an embodiment, the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

In an embodiment, when the first PCI is not equal to the second PCI, whether the first time domain resource and the first reference signal overlap in time domain is implementation-related.

In an embodiment, whether the first time domain resource and the first reference signal overlap in time domain is related to a type of the first PCI.

In an embodiment, the second processor 1201 receives a second information block. The second information block indicates configuration information of the first reference signal.

In an embodiment, the second processor 1201 sends the first reference signal in a first symbol set or receives a second signal in a first symbol set. The first time domain resource and the first reference signal overlap in time domain; a time domain resource occupied by the first reference signal includes the first symbol set; and a time domain resource allocated to the second signal includes the first symbol set.

In an embodiment, the second node is a base station device.

In an embodiment, the second node is a user equipment.

In an embodiment, the second node is a relay node device.

In an embodiment, a sending end of the first signal block simultaneously receives and sends radio signals in the at least one symbol in the first time domain resource.

In an embodiment, when the first PCI is equal to the second PCI, a receiving end of the first signal block does not expect the first time domain resource and the first reference signal to overlap in time domain. When the first time domain resource and the first signal overlap in time domain, a receiving end of the first signal block considers that an error occurs.

In an embodiment, when the first PCI is not equal to the second PCI, the second node 1200 determines whether the first time domain resource and the first reference signal overlap in time domain. When the first time domain resource and the first reference signal overlap in time domain, a receiving end of the first information block does not consider that an error occurs. When the first time domain resource and the first reference signal overlap in time domain, a receiving end of the first signal block determines whether to receive the first reference signal.

In an embodiment, the second processor 1201 includes at least one of {the antenna 420, the transmitter 418, the transmit processor 416, the multi-antenna transmit processor 471, the controller/processor 475, the memory 476} in Embodiment 4.

In an embodiment, the second processor 1201 includes at least one of {the antenna 420, the receiver 418, the receive processor 470, the multi-antenna receive processor 472, the controller/processor 475, the memory 476} in Embodiment 4.

A person of ordinary skill in the art may understand that all or some steps in the method of the foregoing embodiments may be completed by instructing related hardware by using a program. The program may be stored in a computer-readable storage medium, for example, a read-only memory, a hard disk, or an optical disk. Optionally, all or some of the steps of the foregoing embodiments may alternatively be implemented by using one or more integrated circuits. Correspondingly, modules or units in the foregoing embodiments may be implemented in the form of hardware, or may be implemented in the form of a software functional module. Any specific form of combination of hardware and computer software is not limited in this application. The user equipment, the terminal, and the UE in this application include, but are not limited to, wireless communication devices such as an uncrewed aerial vehicle, a communication module on the uncrewed aerial vehicle, a remote control aircraft, an aircraft, a small aircraft, a mobile phone, a tablet computer, a notebook computer, a vehicle-mounted communication device, a vehicle, a car, an RSU, a wireless sensor, a network interface card, an Internet of Things, a radio frequency identification (RFID) terminal, a narrow band Internet of Things (NB-loT) terminal, a machine type communication (MTC) terminal, an enhanced MTC (eMTC) terminal, a data card, a network interface card, a vehicle-mounted communication device, a low-cost mobile phone, and a low-cost tablet computer. A base station or a system device in this application includes, but is not limited to, a macrocellular base station, a microcellular base station, a small cellular base station, a home base station, a relay base station, an evolved radio base station (evolved NodeB, eNB), a gNB, a TRP, a global navigation satellite system (GNSS), a relay satellite, a satellite base station, an air base station, an RSU, an uncrewed aerial vehicle, and a test device, for example, a wireless communication device such as a transceiver apparatus or a signaling tester simulating some functions of a base station.

A person skilled in the art should understand that the present invention may be implemented in other specified forms without departing from the core or basic characteristics thereof. Therefore, the currently disclosed embodiments should be considered as descriptive rather than restrictive in any way. The scope of the present invention is determined by the appended claims rather than the foregoing descriptions, and all modifications within the equivalent meanings and regions thereof are considered to be included therein.

## Claims

1. A first node device used for wireless communication, comprising:
a first processor, receiving a first information block, wherein the first information block is configured to determine a first time domain resource, and the first time domain resource comprises at least one symbol, wherein
the first processor receives a first signal or sends a first signal, wherein
a first reference signal is used for determining a spatial relationship of the first signal, the first reference signal is used for determining a first PCI, the first reference signal comprises a synchronization signal, and whether the first time domain resource and the first reference signal overlap in time domain is related to the first PCI.

2. The first node device according to claim 1, wherein the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

3. The first node device according to claim 2, wherein when the first PCI is not equal to the second PCI, whether the first time domain resource and the first reference signal overlap in time domain is implementation-related.

4. The first node device according to any one of claims 1 to 3, wherein whether the first time domain resource and the first reference signal overlap in time domain is related to a type of the first PCI.

5. The first node device according to any one of claims 1 to 4, wherein the first processor receives a second information block; and the second information block indicates configuration information of the first reference signal.

6. The first node device according to any one of claims 1 to 5, wherein the first processor receives the first reference signal in a first symbol set or sends a second signal in a first symbol set; the first time domain resource and the first reference signal overlap in time domain; a time domain resource occupied by the first reference signal comprises the first symbol set; and a time domain resource allocated to the second signal comprises the first symbol set.

7. A second node device used for wireless communication, comprising:
a second processor, sending a first information block, wherein the first information block is configured to determine a first time domain resource, and the first time domain resource comprises at least one symbol, wherein
the second processor sends a first signal or receives a first signal, wherein
a first reference signal is used for determining a spatial relationship of the first signal, the first reference signal is used for determining a first PCI, the first reference signal comprises a synchronization signal, and whether the first time domain resource and the first reference signal overlap in time domain is related to the first PCI.

8. The second node device according to claim 7, wherein the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

9. The second node device according to claim 8, wherein when the first PCI is not equal to the second PCI, whether the first time domain resource and the first reference signal overlap in time domain is implementation-related.

10. The second node device according to any one of claims 7 to 9, wherein whether the first time domain resource and the first reference signal overlap in time domain is related to a type of the first PCI.

11. The second node device according to any one of claims 7 to 10, wherein the second processor receives a second information block; and the second information block indicates configuration information of the first reference signal.

12. The second node device according to any one of claims 7 to 11, wherein the second processor sends the first reference signal in a first symbol set or receives a second signal in a first symbol set; the first time domain resource and the first reference signal overlap in time domain; a time domain resource occupied by the first reference signal comprises the first symbol set; and a time domain resource allocated to the second signal comprises the first symbol set.

13. A method for a first node used for wireless communication, comprising:
receiving a first information block, wherein the first information block is configured to determine a first time domain resource, and the first time domain resource comprises at least one symbol; and
receiving a first signal or sending a first signal, wherein
a first reference signal is used for determining a spatial relationship of the first signal, the first reference signal is used for determining a first PCI, the first reference signal comprises a synchronization signal, and whether the first time domain resource and the first reference signal overlap in time domain is related to the first PCI.

14. The method according to claim 13, wherein the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

15. The method according to claim 14, wherein when the first PCI is not equal to the second PCI, whether the first time domain resource and the first reference signal overlap in time domain is implementation-related.

16. The method according to any one of claims 13 to 15, wherein whether the first time domain resource and the first reference signal overlap in time domain is related to a type of the first PCI.

17. The method according to any one of claims 13 to 16, comprising:
receiving a second information block, wherein
the second information block indicates configuration information of the first reference signal.

18. The method according to any one of claims 13 to 17, comprising:
receiving the first reference signal in a first symbol set or sending a second signal in a first symbol set, wherein
the first time domain resource and the first reference signal overlap in time domain; a time domain resource occupied by the first reference signal comprises the first symbol set; and a time domain resource allocated to the second signal comprises the first symbol set.

19. A method for a second node used for wireless communication, comprising:
sending a first information block, wherein the first information block is configured to determine a first time domain resource, and the first time domain resource comprises at least one symbol; and
sending a first signal or receiving a first signal, wherein
a first reference signal is used for determining a spatial relationship of the first signal, the first reference signal is used for determining a first PCI, the first reference signal comprises a synchronization signal, and whether the first time domain resource and the first reference signal overlap in time domain is related to the first PCI.

20. The method according to claim 19, wherein the first information block is configured to determine a second PCI; whether the first time domain resource and the first reference signal overlap in time domain is related to whether the first PCI is the same as the second PCI; and when the first PCI is equal to the second PCI, the first time domain resource and the first reference signal are orthogonal to each other in time domain.

21. The method according to claim 20, wherein when the first PCI is not equal to the second PCI, whether the first time domain resource and the first reference signal overlap in time domain is implementation-related.

22. The method according to any one of claims 19 to 21, wherein whether the first time domain resource and the first reference signal overlap in time domain is related to a type of the first PCI.

23. The method according to any one of claims 19 to 22, comprising:
sending a second information block, wherein
the second information block indicates configuration information of the first reference signal.

24. The method according to any one of claims 19 to 23, comprising:
sending the first reference signal in a first symbol set or receiving a second signal in a first symbol set, wherein
the first time domain resource and the first reference signal overlap in time domain; a time domain resource occupied by the first reference signal comprises the first symbol set; and a time domain resource allocated to the second signal comprises the first symbol set.
